# EUROPÄISCHE PATENTSCHRIFT

(11) **EP 3 021 377 B1**
(45) Veröffentlichungstag und Bekanntmachung des Hinweises auf die Patenterteilung: **29.03.2017**
(21) Anmeldenummer: 15190091.7
(22) Anmeldetag: 16.10.2015
(51) Int. Cl.: H01M 2/04, C03C 3/16, H01M 2/06, H01G 2/10, H01M 2/30, H01M 2/08

(54) **BAUTEIL MIT BAUTEILVERSTÄRKUNG UND DURCHFÜHRUNG**
COMPONENT WITH COMPONENT REINFORCEMENT AND IMPLEMENTATION
COMPOSANT PRESENTANT UN RENFORT ET REALISATION

(30) Priorität: 11.11.2014 DE 102014016601
(43) Veröffentlichungstag der Anmeldung: 18.05.2016
(60) Teilanmeldung: 17156178.0
(73) Patentinhaber: Schott AG, 55122 Mainz (DE)
(72) Erfinder: HARTL, Helmut, 1210 Wien (AT)
(74) Vertreter: Sawodny, Michael-Wolfgang

(56) Entgegenhaltungen:
- WO-A1-2012/110246
- CN-A- 101 286 551
- DE-A1-102011 103 976
- US-A1- 2006 035 147

## Beschreibung

Die Erfindung betrifft ein Bauteil mit einer Bauteildicke und wenigstens einer Durchführungsöffnung sowie ein Gehäuse, insbesondere für eine elektrische Speichereinrichtung, insbesondere eine Batterie oder einen Kondensator mit einem erfindungsgemäßen Bauteil und eine Speichereinrichtung mit einem derartigen Gehäuse.

Bei dem Einbringen von Leitern, insbesondere von Metallstiften, in einen Grundkörper, der aus Leichtmetallen wie beispielsweise Aluminium bestehen, werden hermetisch dichte Durchführungen benötigt, wenn derartige Bauteile, beispielsweise Teil eines Gehäuses einer Speichereinrichtung, beispielsweise von Batterien und/oder Kondensatoren sind. Die Batterien können traditionelle Energiequellen wie beispielsweise Blei-Säure-Batterien, Nickel-Cadmium-Batterien oder Nickel-Metall-Batterien sein. Als Batterien im Sinne der Erfindung wird sowohl eine Einwegbatterie, die nach ihrer Entladung entsorgt und/oder recycelt wird, als auch ein Akkumulator verstanden.

Lithium-Ionen-Batterien sind seit vielen Jahren bekannt. Diesbezüglich wird beispielsweise auf "Handbook of Batteries, David Linden, Herausgeber, 2. Auflage, McGrawHill 1995, Kapitel 36 und 39" verwiesen.

Insbesondere für Anwendung von Batterien und/oder Kondensatoren in der Automobilumgebung müssen eine Vielzahl von Problemen wie Korrosionsbeständigkeit, Beständigkeit bei Unfall oder Schwingungsfestigkeit gelöst werden. Des Weiteren ist sicherzustellen, dass die Batterie hermetisch dicht über einen langen Zeitraum ausgelegt ist. Die Dichtheit beeinträchtigen können z. B. Undichtigkeiten im Bereich der Elektrode der Batterie bzw. der Elektrodendurchführung der Batterie, ein Batteriekurzschluss oder Temperaturänderungen, die zu einer verminderten Batterielebensdauer führen. Insbesondere soll auch das Eindringen von Feuchtigkeit in die Batteriezelle vermieden werden.

Um eine bessere Beständigkeit bei Unfall sicherzustellen, schlägt die DE 101 05 5877 A1 ein Gehäuse für eine Lithium-Ionen-Batterie vor, wobei das Gehäuse einen Metallmantel umfasst, der auf beiden Seiten offen ist und verschlossen wird. Der Stromanschluss ist durch einen Kunststoff isoliert. Nachteilig an der Kunststoffisolierung ist die limitierte Temperaturbeständigkeit und die unsichere Dichtheit über die Lebensdauer.

Durchführungen für Speichereinrichtungen wie beispielsweise Batterien, die in ein Leichtmetall eingebracht werden, sind in einer Vielzahl von Dokumenten beschrieben. So beispielsweise in der WO 2012/110242 A1, der WO 2012/110246 A1, der WO 2012/110247 A1, der WO 2012/110245 A1 und insbesondere der WO 2012/1102444 A1 oder der CN 101286551 A.

Die DE 10 2011 103 976 A1 zeigt ebenfalls eine Durchführung insbesondere durch ein Gehäusebauteil, wobei Dicken für den Grundkörper angegeben sind ohne aber ein Verhältnis der Glasmaterialaußenabmessungen zu einer Verstärkungsmaterialaußenabmessung anzugeben.

Die DE 44 13 808 B4 zeigt eine elektrochemische Zelle sowie die Herstellung solcher Zellen. Die elektrochemische Zelle umfasst ein aktives Anoden- und ein aktives Kathodenmaterial sowie einen Halterahmen. Bemessungen der als Knopfzelle ausgebildeten elektrochemischen Zelle sind nicht angegeben. Nachteilig an den Durchführungen, wie beispielsweise in der WO 2012/110244 A1 beschrieben, war, dass der Grundkörper in der Regel eine Dicke aufwies, die der Einglasungslänge entsprach. Hierdurch hatten die Gehäusebauteile relativ hohes Gewicht und zu geringen Innenbauraum, so dass Volumen bei einer Batteriezelle verloren gingen.

Wollte man Gehäusebauteile herstellen, so war es notwendig, eine Verdickung zerspanend aus dem Vollmaterial herzustellen. Ein weiteres Problem bestand darin, dass hermetische Dichtheit wegen nicht ausreichender Vorspannung nicht erzielt wurde Erfindungsgemäß wird das Problem, ein möglichst dünnes und leichtes Bauteil zur Verfügung zu stellen, in Kombination mit der geforderten hermetischen Dichtheit durch ein Bauteil gemäß Anspruch 1 gelöst.

Unter hermetischer Dichtheit wird verstanden, dass bei einem Druckunterschied von 1 bar die Helium-Leckrate < 1 · 10⁻⁸ mbar ls⁻¹, bevorzugt < 1 · 10⁻⁸ mbar ls⁻¹ ist.

Die hermetische Dichtheit stellt sicher, dass die Lebensdauer einer elektrischen Speichereinrichtung, insbesondere einer Batterie, erheblich erweitert wird. Die hermetische Dichtheit wird auch gewährleistet, wenn der durch das Glas- oder Glaskeramikmaterial hindurchgeführte stiftförmige Leiter sich aufgrund hoher Ströme und/oder bei Kurzschluss kurzzeitig stark erwärmt. Insbesondere wird auch die hermetische Dichtheit auch verhindert, dass Feutigkeit in die Batteriezelle eindringen kann.

Die Erfindung wird durch die in Anspruch 1 genannten Merkmale definiert.

Das erfindungsgemäße Bauteil mit einer Bauteildicke (BD) und wenigstens einer Durchführungsöffnung, durch die ein Leiter, insbesondere ein im Wesentlichen stiftförmiger Leiter in einem kreisrunden oder ovalen Glas- oder Glaskeramikmaterial mit einer Glasmaterial-Außenabmessung (GA) und einer Einglaslänge (EL) hindurchgeführt wird, weist im Bereich der Durchführungsöffnung eine Verstärkung mit einer Bauteildurchgangsöffnungsdicke (BDD) auf, wobei die Bauteildurchgangsöffnungsdicke (BDD) größer als die Bauteildicke (BD) ist. Die Verstärkung weist eine Verstärkungsmaterialaußenabmessung (VA) auf, die der Breite der Verstärkung entspricht.

Erfindungsgemäß wurde herausgefunden, dass, um die oben genannten Bedingungen zu erfüllen, das Verhältnis der Glasmaterialaußenabmessung (GA) in Form des Durchmessers des Glas- oder Glaskeramikmaterials zur Verstärkungsmaterialaußenabmessung (VA) in Form der Breite der Verstärkung größer gleich 1 zu 1,2 ist, d.h. es gilt GA/VA ≥ 1/1,2. Besonders bevorzugt ist es, wenn das Verhältnis GA/VA im Bereich 1/1,2 bis 1/2,2 liegt. Konkret bedeutet diese Bedingung, dass bei einem zylinderförmigen Glasmaterial und bei einem kreisförmigen Verstärkungsring das Verhältnis des Außendurchmessers des zylinderförmigen Verstärkungsrings größer gleich 1 zu 1,2 ist, insbesondere im Bereich 1 zu 1,2 bis 1 zu 2,2 liegt. Durch die Wahl des Verhältnisses GA/VA wird überraschenderweise erreicht wird, dass ein ausreichender Druck auf das Glasmaterial im Bereich der Durchgangsöffnung aufgebracht werden kann, so dass eine hermetische Dichtheit zur Verfügung gestellt wird. Desweiteren wird durch die Breite der Verstärkung in Ihren materiellen Außenabmessungen die für eine hermetische Dichtheit notwendige Kompression auf das Glas aufgebracht, was ebenfalls die hermtische Dichtheit unterstützt.

Der Vorteil der erfindungsgemäßen Ausgestaltung liegt darin, dass ein sehr dünnes und daher gewichtssparendes Material für das Bauteil eingesetzt werden kann. Dies ist insbesondere dann von Vorteil, wenn das Bauteil als Teil eines Gehäuses, z. B. eines Gehäuses einer Speichereinrichtung, z. B. eines Batteriegehäuses, insbesondere eines Batteriedeckels oder eines Kondensators, insbesondere Kondensatordeckels eingesetzt wird.
Durch die erfindungsgemäße Ausgestaltung mittels eines Verstärkungsrings, der deutlich größer in den Außenabmessungen ist als das im Wesentlichen zylinderförmige Glasmaterial, wird überraschenderweise erreicht, dass ein ausreichender Druck auf das Glasmaterial im Bereich der Durchführungsöffnung aufgebracht werden kann, so dass eine hermetische Dichtheit, wie zuvor beschrieben, vorliegt. Des Weiteren wird hierdurch eine ausreichende Festigkeit im Bereich der Durchführung zur Verfügung gestellt.

Die Bauteildurchgangsdicke im Bereich der Verstärkung entspricht, um eine hermetisch dichte Durchführung sicherzustellen, im Wesentlichen der Einglasungslänge (EL). Dadurch kann eine höhere mechanische Festigkeit der eingeglasten Anoden oder Kathoden erzielt werden.

In einer ersten Ausgestaltung der Erfindung kann vorgesehen sein, dass das Bauteil einen sehr dünnen Grundkörper, der beispielsweise den Gehäusedeckel ausbildet, mit einer Bauteildicke (BD) darstellt und ein separates Verstärkungsbauteil mit einer Verstärkungsbauteildicke (VD) im Bereich der Eingangsöffnung angeordnet wird, so dass sich die Dicken des Bauteils, nämlich die Bauteildicke (BD) und die Verstärkungsbauteildicke (VD) zur Bauteildurchgangsöffnung (BDD) addieren.

Alternativ zu einem separaten Bauteil, das im Bereich der Bauteildurchgangsöffnung, beispielsweise als Ring unterhalb des Grundkörpers, im Bereich der Durchgangsöffnung angeordnet werden kann, kann vorgesehen sein, dass der Grundkörper mit der Bauteildicke (BD) und das Verstärkungsbauteil in einem einzigen Bauteil zusammengefasst sind, wobei im Bereich der Bauteildurchführungsöffnung die Bauteildurchgangsöffnungsdicke (BDD) zur Verfügung gestellt wird. Dies kann beispielsweise dadurch erfolgen, dass der sehr dünne Grundkörper im Bereich der Durchgangsöffnung tiefgezogen wird. Um die notwendigen größeren Abmessungen im Bereich der Verstärkung auszubilden, wird der Grundkörper anschließend an das Tiefziehen gestaucht.
In einer weiteren Alternative der Erfindung ist wiederum der Grundkörper mit der Bauteildicke (BD) und das Verstärkungsbauteil ein einziges Bauteil, wobei im Bereich der Bauteildurchführungsöffnung die Bauteildurchführungsdicke (BDD) zur Verfügung gestellt wird. Dies erfolgt in der weiteren Alternative dadurch, dass der sehr dünne Grundkörper im Bereich der Durchgangsöffnung gebogen, insbesondere aus einem Blechteil gezogen und anschließend gefaltet wird.

Die Breite der Verstärkung ist dann größer als die Dicke des Grundkörpers.

Dadurch, dass die Breite der Verstärkung in ihren materiellen Außenabmessungen, wie zuvor beschrieben, größer als 1,2 x die Außenabmessungen des Glasmaterials ist, kann die für eine hermetische Dichtung notwendige Kompression auf das Glas aufgebracht werden, wodurch eine hermetisch dichte Durchführung zur Verfügung gestellt wird Um eine ausreichende hermetische Dichtheit zu erzielen, ist es des Weiteren besonders vorteilhaft, wenn die Einglasungslänge größer als 1,5 mm ist, insbesondere im Bereich 1,5 mm bis 8 mm liegt.

Besonders bevorzugt sind dünne Bauteile, die über eine ausreichende Stabilität verfügen und bei Umformung mit anschließendem Zurückstauchen auch noch eine ausreichende Verstärkung darstellen, die mindestens im Bereich der Einglasungslänge, bevorzugt mindestens der Einglasungslänge plus 2 mm, insbesondere bevorzugt 3,5 mm bis 10 mm, liegt.

Besonders bevorzugt ist es, wenn als Material, das für das Bauteil, insbesondere den Grundkörper wie auch das Verstärkungsbauteil, verwandt wird, ein Leichtmetall mit einem spezifischen Gewicht < 5 kg/dm³ und/oder einem Schmelzpunkt im Bereich 350° C bis 800° C und/oder einer elektrischen Leitfähigkeit im Bereich 5 · 10⁶ S/m bis 50 · 10⁶ S/m und/oder einem Ausdehnungskoeffizienten α (20° C bis 300° C) im Bereich 18 · 10⁻⁶/ K bis 30 · 10-⁶/K umfasst.
Besonders bevorzugt ist es, wenn als Materialien für das Leichtmetall Aluminium, eine Aluminiumlegierung, Magnesium, eine Magnesiumlegierung oder auch andere Metalle und Legierungen wie Edelstahl sind. Besonders bevorzugt handelt es sich bei dem erfindungsgemäßen Bauteil um ein Deckelbauteil eines Gehäuses, insbesondere eines Gehäuses für eine elektrische Speichereinrichtung, wobei die Speichereinrichtung, beispielsweise eine Batterie oder ein Kondensator sein kann.

Neben dem Gehäuse stellt die Erfindung auch eine Speichereinrichtung, insbesondere eine Batterie oder einen Kondensator, mit einem derartigen Bauteil, zumindest als Deckelbauteil, durch das die Durchführung hindurchgeführt wird, zur Verfügung.

Die Erfindung soll nachfolgend anhand der Zeichnungen näher beschrieben werden.

Es zeigen:
- Fig. 1: eine erste Ausführungsform der Erfindung mit separatem Verstärkungsbauteil;
- Fig. 2: eine zweite Ausgestaltung der Erfindung mit einem einteiligen Bauteil mit Verstärkungsabschnitten.
- Fig. 3: eine dritte Ausgestaltung der Erfindung mit einem einteiligen Bauteil mit Verstärkungsabschnitten.

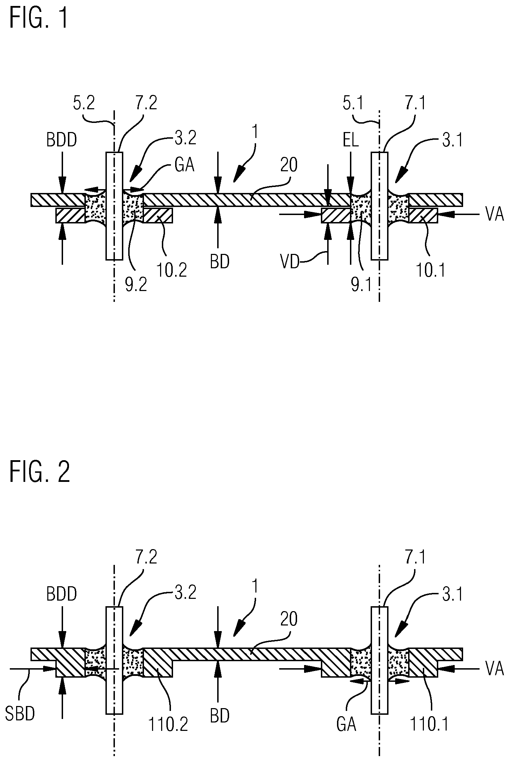

Fig. 1 zeigt ein erfindungsgemäßes Bauteil 1 mit zwei Durchführungsöffnungen 3.1, 3.2. Die Durchführungsöffnungen haben bevorzugt eine um die Achse 5.1 bzw. 5.2 zylindrische Form, beispielsweise eine runde Form oder aber auch eine ovale Form.
Durch die Durchführungsöffnungen 3.1, 3.2 werden Leiter 7.1, 7.2, hier in Form von Stiften, in einem Glasmaterial 9.1, 9.2 hindurchgeführt.
Die Dicke des Bauteils beträgt BD, die Bauteildurchgangsöffnungsdicke BDD und die Dicke der separaten Verstärkungsbauteile 10.1, 10.2 VD.
Wie aus Fig. 1 hervorgeht, gilt dass, die Bauteildurchgangsöffnungsdicke BDD gleich DD plus VD ist.
Die Glasmaterialaußenabmessung des Glasmaterials 9.1, 9.2 beträgt GA, bei einem erfindungsgemäß kreisrunden bzw. ovalen Glasmaterial entspricht dies dem Durchmesser des Glaspfropfens.

Die Verstärkungsmaterial-Außenabmessungen VA in Form der Breite der Verstärkung des separaten Verstärkungsbauteils, das bevorzugt ebenfalls kreisförmig bzw. ringförmig ausgeführt ist, beträgt das 1,2-fache der Glasmaterial-Außenabmessungen GA, in Form des Durchmessers des Glas- oder Glaskeramikmaterials d.h. bei kreisförmigem bzw. rundem Glasmaterialpfropfen und kreisförmig bzw. rundem Verstärkungsmaterial ist der Durchmesser des Verstärkungsmaterials das mindestens 1,2-fache des Durchmessers des Glasmaterials.
Ebenfalls zu erkennen ist die Länge EL der Einglasung in die Bauteildurchgangsöffnung. Bei dem dargestellten Bauteil entspricht die Länge der Einglasung (EL) der Länge der Bauteildurchgangsöffnung bzw. der Bauteildurchgangsdicke (BDD).

Selbstverständlich wäre es auch möglich, dass die Einglasungslänge EL kürzer ist als die Bauteildicke BDD, umgekehrt ist dies aber nicht möglich.

Als Material für den Grundkörper 20, der vorliegend ein Gehäuseteil, bevorzugt ein Deckelteil, beispielsweise einer Speichereinrichtung wie einer Batterie darstellt, ist ein Leichtmetall mit einem spezifischen Gewicht von 5 kg/dm³ und/oder einem Schmelzpunkt im Bereich 350° C bis 800° C und/oder einer elektrischen Leitfähigkeit im Bereich 5 · 10⁶ S/m bis 50 · 10⁶ S/m und/oder einem Ausdehnungskoeffizienten α (20° C bis 300° C) im Bereich 18 · 10-6 /K bis 30 · 10⁻⁶/K. Bei den Leichtmetallen handelt es sich bevorzugt um Aluminium, Aluminiumlegierungen, Magnesium, Magnesiumlegierungen. Das Material der Leiterstifte 7.1, 7.2 ist bevorzugt ein Metall, insbesondere Kupfer, Cusic, eine Kupferlegierung, ASC, Silber, eine Silberlegierung, Gold oder eine Goldlegierung oder aber auch Aluminium oder eine Aluminiumlegierung.

Als Glasmaterial für die Einglasung 9.2 wird bevorzugt ein Phosphatglas, wie beispielsweise in der WO 2012/110247 beschrieben, deren Offenbarungsgehalt in die vorliegende Anmeldung vollumfänglich mitaufgenommen wird, eingesetzt In Fig. 2 ist eine alternative Ausgestaltung der Erfindung gezeigt.

Wiederum wurde das Bauteil mit 1 bezeichnet, es ist aber im Gegensatz zu Fig. 1 nunmehr nicht zweiteilig im Bereich der Bauteildurchgangsöffnungen 3.1, 3.2 ausgebildet, sondern einteilig, d.h. der Grundkörper 20 umfasst im Bereich der Bauteildurchgangsöffnungen 3.1, 3.2 Verdickungen 110.1, 110.2, die dadurch erhalten werden, dass das Bauteil 1 im Bereich der Verstärkung 110.1, 110.2 tiefgezogen wird, wodurch das Bauteil im Bereich der Bauteildurchgangsöffnung die Dicke BDD erhält. Die Dicke BDD ist stets größer als die Dicke BD des Bauteils. Durch an das Umformen in Form von Tiefziehen und anschließendes Zurückstauchen wird die in Fig. 2 dargestellte Form der Verstärkung erreicht, bei der Außendurchmesser VA im Bereich des Verstärkungselements 1,2 x größer ist als der Außendurchmesser der Einglasung GA. Gleiche Bauteile wie in Fig. 1 werden mit denselben Bezugsziffern belegt.

Auch die Dicke des zurückgestauchten verstärkten Bereichs ist mit einer Dicke BDD größer als die Dicke des Grundmaterials BD. Die Breite des zurückgestauchten verstärkten Bereichs ist mit SBD bezeichnet.

Die Bearbeitung im Bereich der Verstärkung kann sichtbar gemacht werden, da die Struktur-Fließlinien im Gegensatz zu einem mittels spanenden Verfahren bearbeiteten Bauteil im Bereich der Stauchung durch den Umformprozess gebeugt werden.

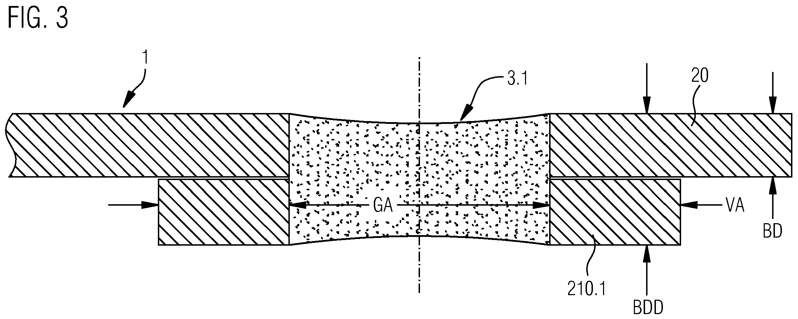

In Fig. 3 ist eine weitere alternative Ausgestaltung der Erfindung gezeigt.

Wiederum wurde das Bauteil mit 1 bezeichnet, es ist aber im Gegensatz zu Fig. 1 nunmehr nicht zweiteilig im Bereich der Bauteildurchgangsöffnungen 3.1, 3.2 ausgebildet, sondern einteilig, d.h. der Grundkörper 20 umfasst im Bereich der Bauteildurchgangsöffnungen 3.1, 3.2 Verdickungen 210.1, 210.2, die dadurch erhalten werden, dass das Bauteil 1 im Bereich der Verstärkung 210.1, 210.2 tiefgezogen und anschließend gefaltet wird, wodurch das Bauteil im Bereich der Bauteildurchgangsöffnung die Dicke BDD erhält. Die Dicke BDD ist durch die Faltung etwa zwei Mal die Dicke BD des Bauteils in der dargestellten Ausführungsform. Durch an das Umformen in Form von Tiefziehen und anschließende Faltung wird die in Fig. 3 dargestellte Form der Verstärkung erreicht, wobei der Außendurchmesser VA im Bereich des Verstärkungselements 1,2 x größer ist als der Außendurchmesser der Einglasung GA. Gleiche Bauteile wie in Fig. 1 werden mit denselben Bezugsziffern belegt.

Die Stärke des verstärkten Bereichs ist mit einer Stärke von ungefähr 2 x BD größer als die Dicke des Grundmaterials BD. Es wäre anstelle der einfachen Faltung auch eine mehrfache Faltung, z. B. eine 3-fach und 4-fache Faltung, möglich, um die Dicke im Bereich der Verstärkung einzustellen, ohne dass von der Erfindung abgewichen wird.

Die Bearbeitung im Bereich der Verstärkung kann sichtbar gemacht werden, da die Struktur-Fließlinien im Gegensatz zu einem mittels spanenden Verfahren bearbeiteten Bauteil im Bereich der Stauchung bzw. Faltung durch den Umformprozess gebeugt werden.

Ansonsten sind gleiche Bauteile wie in Fig. 1 in Fig. 3 mit denselben Bezugsziffern bezeichnet. Bevorzugt ist das Material des Bauteils, also der Grundkörper einschließlich des Verstärkungsbereichs, ein Leichtmetall, wie bereits für den Grundkörper zu Fig. 1 beschrieben.

Die zweite und dritte Alternative, die zuvor beschrieben wurde, hat den Vorteil, dass das Anbringen eines zusätzlichen Bauteils, nämlich des Verstärkungsrings, eingespart werden kann.

Besonders bevorzugt sind Glasmaterialien, die nachfolgende Komponenten in mol-% umfassen:

| | |
|---|---|
| P₂O₅ | 35-50 mol-%, insbesondere 39-48 mol-% |
| Al₂O₃ | 0-14 mol-%, insbesondere 2-12 mol-% |
| B₂O₃ | 2-10 mol-%, insbesondere 4-8 mol-% |
| Na₂O | 0-30 mol-%, insbesondere 0-20 mol-% |
| M₂O | 0-20 mol-%, insbesondere 12-20 mol-%, wobei M=K, Cs, Rb sein kann |
| PbO | 0-10 mol-%., insbesondere 0-9 mol-% |
| Li₂O | 0-45 mol-%, insbesondere 0-40 mol-%, ganz bevorzugt 17-40 mol-% |
| BaO | 0-20 mol-%, insbesondere 0-20 mol-%, ganz bevorzugt 5-20 mol-% |
| Bi₂O₃ | 0-10 mol-%, insbesondere 1-5 mol-%, ganz bevorzugt 2-5 mol-% |

Bevorzugt ist das Glasmaterial derart zusammengesetzt, dass es einen Ausdehnungskoeffizienten α im Bereich 20° C bis 300° C ≥ 13 · 10⁻⁶/K, bevorzugt im Bereich 13 · 10⁻⁶/K bis 25 · 10⁻⁶/K aufweist.

Mit der Erfindung wird erstmals ein dünnes Gehäusebauteil, insbesondere für ein Gehäuse einer Speichereinrichtung, zur Verfügung gestellt, das sich durch eine sehr geringe Materialdicke BDD auszeichnet und damit ein geringes Gewicht und großes Zellvolumen sowie einer hermetisch dichten Einglasung mit einer Einglasungslänge EL im Bereich der Durchführungsöffnung für die Leiter.

Insbesondere ist es mit der Erfindung möglich auch bei einem einteiligen Bauteil durch einen Umformprozess eine ausreichende Kompression für eine hermetisch dichte Durchführung zur Verfügung zu stellen.

Mit der Erfindung wird zum einen die notwendige mechanische Festigkeit bei dünnen Materialien, die in Gehäusen z. B. als Deckel eingesetzt werden, erhöht, zum anderen die notwendigen Drücke bzw. Radialkräfte für die hermetisch dichte Einglasung zur Verfügung gestellt.

## Patentansprüche

1. Bauteil (1) mit einer Bauteildicke (BD) und wenigstens einer Durchführungsöffnung (3.1, 3.2), bevorzugt Gehäusebauteil, insbesondere eines Batteriegehäuses oder Kondensatorgehäuses, wobei durch die Durchführungsöffnung (3.1, 3.2) ein Leiter (7.1, 7.2), insbesondere ein im Wesentlichen stiftförmiger Leiter in einem kreisrunden oder ovalen Glas- oder Glaskeramikmaterial mit einer Glasmaterialaußenabmessung (GA), die dem Durchmesser des Glas- oder Glaskeramikmaterials entspricht, und einer Einglasungslänge (EL) hindurchgeführt wird, wobei das Bauteil im Bereich der Durchführungsöffnung (3.1, 3.2) eine Verstärkung (10.1, 10.2) mit einer Bauteildurchgangsöffnungsdicke (BDD) aufweist, wobei die Bauteildurchgangsöffnungsdicke (BDD) größer als die Bauteildicke (BD) ist und die Verstärkung (10.1, 10.2) eine Verstärkungsmaterialaußenabmessung (VA), die der Breite der Verstärkung entspricht, aufweist,
**dadurch gekennzeichnet, dass**
das Verhältnis der Glasmaterialaußenabmessung (GA) in Form des Durchmessers des Glas- oder Glaskeramikmaterials zur Verstärkungsmaterialaußenabmessung (VA) in Form der Breite der Verstärkung ≥ 1 zu 1,2 ist, insbesondere im Bereich 1 zu 1,2 bis 1 zu 2,2 liegt.

2. Bauteil nach Anspruch 1,
**dadurch gekennzeichnet, dass**
die Bauteildurchgangsdicke (BDD) der Verstärkung wenigstens der Einglasungslänge (EL) entspricht.

3. Bauteil nach einem der Ansprüche 1 bis 2,
**dadurch gekennzeichnet, dass**
das Bauteil (1) einen Grundkörper (5) mit der Bauteildicke (BD) und ein separates Verstärkungsbauteil (10.1, 10.2) mit einer Verstärkungsbauteildicke (VD) aufweist und sich die Verstärkungsbauteildicke (VD) und die Bauteildicke (BD) zur Bauteildurchgangsöffnungsdicke (BDD) addieren.

4. Bauteil nach einem der Ansprüche 1 bis 2,
**dadurch gekennzeichnet, dass**
das Bauteil einen Grundkörper (5) mit der Bauteildicke (BD) und das Verstärkungsbauteil (10.1, 10.2) in einem einzigen Bauteil umfasst, wobei im Bereich der Bauteildurchgangsöffnung (3.1, 3.2) die Bauteildurchgangsöffnungsdicke (BDD) zur Verfügung gestellt wird.

5. Bauteil nach einem der Ansprüche 1 bis 4,
**dadurch gekennzeichnet, dass**
die Einglasungslänge (EL) größer als 1,5 mm ist, insbesondere im Bereich 1,5 mm bis 8 mm liegt.

6. Bauteil nach einem der Ansprüche 1 bis 5,
**dadurch gekennzeichnet, dass**
die Bauteildurchgangsöffnungsdicke (BDD) mindestens der Länge der Einglasung entspricht, bevorzugt mindestens der Einglasungslänge plus 2 mm.

7. Bauteil nach einem der Ansprüche 1 bis 6,
**dadurch gekennzeichnet, dass**
das Bauteil (1) wenigstens teilweise ein Leichtmetall mit einem spezifischen Gewicht < 5 kgdm³ und/oder einem Schmelzpunkt im Bereich 350° C bis 800° C und/oder einer elektrischen Leitfähigkeit im Bereich 5 · 10⁻⁶ S/m bis 50 · 10⁻⁶ S/m und/oder einem Ausdehnungskoeffizient α (20° C - 300° C) im Bereich 18 · 10⁻⁶/K bis 30 · 10-6 /K umfasst.

8. Bauteil nach Anspruch 7,
**dadurch gekennzeichnet, dass**
das Leichtmetall, Aluminium, eine Aluminiumlegierung, Magnesium, eine Magnesiumlegierung, Titan oder eine Titanlegierung ist.

9. Gehäuse, insbesondere für eine elektrische Speichereinrichtung, insbesondere eine Batterie oder einen Kondensator mit einem Bauteil nach einem der Ansprüche 1 bis 7.

10. Speichereinrichtung, insbesondere Batterie oder Kondensator, mit einem Gehäuse nach Anspruch 9.

## Claims

1. A component (1) having a component thickness (BD) and at least one passage opening (3.1, 3.2), preferably a housing component, especially a battery housing or capacitor housing, wherein a conductor (7.1, 7.2) and a glazed length (EL) is guided through the passage opening (3.1, 3.2), said conductor especially being a substantially pin-like conductor in a circular or oval glass or glass-ceramic material with an outer dimension (GA) of the glass material which corresponds to the diameter of the glass or glass-ceramic material, wherein the component has a reinforcement (10.1, 10.2) with a component passage opening thickness (BDD) in the region of the passage opening (3.1, 3.2), wherein the component passage opening thickness (BDD) is greater than the component thickness (BD), and the reinforcement (10.1, 10.2) has a reinforcing material outer dimension (VA) which corresponds to the width of the reinforcement,
**characterized in that**
the ratio of the glass material outer dimension (GA) in form of the diameter of the glass or glass-ceramic material to the reinforcing material outer dimension (VA) in form of the width of the reinforcement is ≥ 1 to 1.2, especially in the range of 1 to 1.2 up to 1 to 2.2.

2. A component according to claim 1, **characterized in that** the component passage thickness (BDD) of the reinforcement at least corresponds to the glazing length (EL).

3. A component according to one of the claims 1 to 2, **characterized in that** the component (1) has a base body (5) with a component thickness (BD) and a separate reinforcing component (10.1, 10.2) with a reinforcing component thickness (VD), and the reinforcing component thickness (VD) and the component thickness (BD) are added to form the component passage opening thickness (BDD).

4. A component according to one of the claims 1 to 2, **characterized in that** the component comprises a base body (5) with the component thickness (BD) and the reinforcing component (10.1, 10.2) in a single component, wherein the component passage opening thickness (BDD) is made available in the region of the component passage opening (3.1, 3.2).

5. A component according to one of the claims 1 to 4, **characterized in that** the glazing length (EL) is greater than 1.5 mm, and lies especially in the range of 1.5 mm to 8 mm.

6. A component according to one of the claims 1 to 5, **characterized in that** the component passage opening thickness (BDD) at least corresponds to the length of the glazing, preferably at least the glazing length plus 2 mm.

7. A component according to one of the claims 1 to 6, **characterized in that** the component (1) at least partly comprises a light metal with a specific weight < 5 kgdm³ and/or a melting point in the range of 350°C to 800°C and/or an electrical conductivity in the range of 5 · 10⁻⁶ S/m to 50 · 10⁻⁶ S/m and/or an expansion coefficient α (20°C to 300°C) in the range of 18 · 10⁻⁶/K to 30 · 10⁻⁶/K.

8. A component according to claim 7, **characterized in that** the light metal is aluminium, an aluminium alloy, magnesium, a magnesium alloy, titanium or a titanium alloy.

9. A housing, especially for an electrical storage device, especially a battery or a capacitor with a component according to one of the claims 1 to 7.

10. A storage device, especially a battery or a capacitor, having a housing according to claim 9.

## Revendications

1. Composant (1) ayant une épaisseur de composant (BD) et au moins une ouverture de passage (3.1, 3.2), de préférence composant de boîtier, en particulier de boîtier de batterie ou de boîtier de condensateur, dans lequel un conducteur (7.1, 7.2) est passé à travers l'ouverture de passage (3.1, 3.2), en particulier un conducteur sensiblement en forme de broche dans un matériau en verre ou en vitrocéramique rond ou ovale ayant une dimension extérieure du matériau vitreux (GA) correspondant au diamètre du matériau en verre ou en vitrocéramique et ayant une longueur d'inclusion dans le verre (EL), lequel composant présente au niveau de l'ouverture de passage (3.1, 3.2) un renfort (10.1, 10.2) ayant une épaisseur d'ouverture de passage du composant (BDD), l'épaisseur d'ouverture de passage du composant (BDD) étant plus grande que l'épaisseur du composant (BD) et le renfort (10.1, 10.2) présentant une dimension extérieure du matériau de renfort (VA) correspondant à la largeur du renfort, **caractérisé en ce que** le rapport entre la dimension extérieure du matériau vitreux (GA) constituée par le diamètre du matériau en verre ou en vitrocéramique et la dimension extérieure du matériau de renfort (VA) constituée par la largeur du renfort est ≥ 1 pour 1,2, en particulier comprise entre 1 pour 1,2 et 1 pour 2,2.

2. Composant selon la revendication 1, **caractérisé en ce que** l'épaisseur de passage du composant (BDD) du renfort correspond au moins à la longueur d'inclusion dans le verre (EL).

3. Composant selon l'une des revendications 1 à 2, **caractérisé en ce que** le composant (1) présente un corps de base (5) ayant l'épaisseur du composant (BD) et un composant de renfort (10.1, 10.2) séparé ayant une épaisseur du composant de renfort (VD) et l'épaisseur du composant de renfort (VD) et l'épaisseur du composant (BD) s'additionnent pour donner l'épaisseur de l'ouverture de passage du composant (BDD).

4. Composant selon l'une des revendications 1 à 2, **caractérisé en ce que** le composant inclut un corps de base (5) ayant l'épaisseur du composant (BD) et le composant de renfort (10.1, 10.2) dans un seul composant, l'épaisseur de l'ouverture de passage du composant (BDD) étant disponible au niveau de l'ouverture de passage du composant (3.1, 3.2).

5. Composant selon l'une des revendications 1 à 4, **caractérisé en ce que** la longueur d'inclusion dans le verre (EL) est supérieure à 1,5 mm et en particulier comprise entre 1,5 mm et 8 mm.

6. Composant selon l'une des revendications 1 à 5, **caractérisé en ce que** l'épaisseur de l'ouverture de passage du composant (BDD) correspond au moins à la longueur de vitrification, de préférence au moins à la longueur d'inclusion dans le verre plus 2 mm.

7. Composant selon l'une des revendications 1 à 6, **caractérisé en ce que** le composant (1) contient au moins en partie un métal léger ayant un poids spécifique < 5 kg/dm³ et /ou un point de fusion compris entre 350 °C et 800 °C et/ou une conductivité électrique comprise entre 5 × 10⁻⁶ S/m et 50 × 10⁻⁶ S/m et/ou un coefficient de dilatation α (20 °C - 300 °C) compris entre 18 × 10⁻⁶/K et 30 × 10⁻⁶/K.

8. Composant selon la revendication 7, **caractérisé en ce que** le métal léger est de l'aluminium, un alliage d'aluminium, du magnésium, un alliage de magnésium, du titane ou un alliage de titane.

9. Boîtier, en particulier pour un dispositif accumulateur électrique, en particulier une batterie ou un condensateur, avec un composant selon l'une des revendications 1 à 7.

10. Dispositif accumulateur, en particulier batterie ou condensateur, avec un boîtier selon la revendication 9.
